# EUROPEAN PATENT APPLICATION

(11) **EP 4 553 297 A1**
(43) Date of publication of application: **14.05.2025**
(21) Application number: 23891245.5
(22) Date of filing: 12.10.2023
(51) Int. Cl.: F01N 3/08, G01F 23/2962

(54) **LIQUID LEVEL DETECTING DEVICE**

(30) Priority: 15.11.2022 JP 2022182501
(71) Applicant: Hitachi Construction Machinery Co., Ltd., Tokyo 110-0015 (JP)
(72) Inventor: SATOU, Masashi, Tsuchiura-shi, Ibaraki 300-0013 (JP); YAMASHITA, Masashi, Tsuchiura-shi, Ibaraki 300-0013 (JP); HARA, Katsutaka, Tsuchiura-shi, Ibaraki 300-0013 (JP); HAMANO, Hideyuki, Tsuchiura-shi, Ibaraki 300-0013 (JP)
(74) Representative: Manitz Finsterwald Patent- und Rechtsanwaltspartnerschaft mbB
(86) International application number: PCT/JP2023/037017
(87) International publication number: WO 2024/106087

(57) **Abstract**

A liquid level detecting device (21) includes a venting tube (27) located on an upper side (other side) of a case (22) opposite a water flow hole (25) and an ultrasonic sensor (23) and provided so as to penetrate a side surface portion (22A) of the case (22). In addition, the venting tube (27) is provided with external venting holes (28) that are open outward of the case (22) and an internal venting hole (29) that is open on the upper side (other side) of the case (22) within the case (22) and in communication with the external venting holes (28).

## Description

### TECHNICAL FIELD

The present invention relates to a liquid level detecting device provided at a liquid tank reserving a liquid such as urea water used for purifying exhaust gas.

### BACKGROUND ART

General types of construction machines and related vehicles include a diesel engine as a prime mover. Nowadays, such construction machines include an exhaust gas purifying device using urea water (urea water solution) as a reducing agent in order to remove nitrogen oxides (NOx) from an exhaust gas discharged by a diesel engine. Accordingly, construction machines are each provided with a urea water tank for reserving urea water.

Such a urea water tank is provided with a liquid level detecting device for detecting a remaining amount of urea water, that is, a liquid level position of the urea water. One such known liquid level detecting device includes a tubular housing provided to extend in the vertical direction within a urea water tank, an ultrasonic sensor provided underneath the housing and detecting a liquid level position by reflecting ultrasound oscillating upward off a liquid level of urea water, a fluid port provided underneath the housing and moving the urea water between the inside and the outside of the housing, and an air vent provided in the housing to be located upward from the liquid level of the urea water and moving the air between the inside and the outside of the housing (Patent Document 1).

Herein, a construction machine travels or is operated to allow the urea water to slosh, resulting in generation of air bubbles in the urea water tank. The presence of such air bubbles in the urea water can fail to properly detect the liquid level position because the air bubbles reflect ultrasound oscillated from the ultrasonic sensor. As a remedy, Patent Document 1 discloses a technique for preventing ingress of air bubbles into the housing by covering the fluid port with a porous membrane.

### PRIOR ART DOCUMENT

### PATENT DOCUMENT

Patent Document 1: International Publication No. 2020/036648 A

### SUMMARY OF THE INVENTION

As described above, Patent Document 1 discloses a technique for preventing ingress of air bubbles into a housing by covering a fluid port with a porous membrane. However, construction machines may be operated at a working site on rugged land, uneven land, inclined land and other types of land, thereby allowing urea water to significantly slosh to cause its liquid level to reach an air vent on the upper side. The resultant ingress of the urea water containing air bubbles from the air vent unfortunately allows the air bubbles to adversely affect detection of a liquid level position of the urea water, resulting in lower reliability.

In this case, similarly to the fluid port, the air vent can be covered with a porous membrane to prevent ingress of air bubbles into the housing. Nevertheless, the porous membrane is not only prone to airflow resistance but also blocked only by airborne droplets of the urea water hitting the membrane, which lowers the air flow property and fails to keep the pressure even.

In view of the above-described problems of conventional technologies, an object of the present invention is to provide a liquid level detecting device capable of improving the reliability for detecting a liquid level position by preventing ingress of a liquid containing air bubbles from a venting hole into a case.

A liquid level detecting device of the present invention includes a tubular case with a water flow hole allowing a liquid to flow into the case and an ultrasonic sensor provided on one side of the case and oscillating and receiving ultrasound, the liquid level detecting device further including a venting tube located on other side of the case opposite the water flow hole and the ultrasonic sensor and provided so as to penetrate a side surface portion of the case, characterized in that the venting tube is provided with an external venting hole that is open outward of the case and an internal venting hole that is open on the other side of the case within the case and in communication with the external venting hole.

The liquid level detecting device according to the present invention can prevent ingress of a liquid containing air bubbles from a venting hole into a case and improve the reliability for detecting a liquid level position.

### BRIEF DESCRIPTION OF THE DRAWINGS

Fig. 1 is a left side view showing a wheel loader with a liquid level detecting device according to a first embodiment of the present invention.
Fig. 2 is a cross-sectional view showing a urea water tank, the liquid level detecting device and the like.
Fig. 3 is a perspective view showing the liquid level detecting device in Fig. 2.
Fig. 4 is a perspective view showing a liquid level detecting device according to a second embodiment.
Fig. 5 is a perspective view showing a liquid level detecting device according to a third embodiment.

### MODE FOR CARRYING OUT THE INVENTION

A liquid level detecting device according to one embodiment of the present invention will be described in detail with reference to the attached drawings by way of the case provided to a urea water tank of a wheel loader as a construction machine.

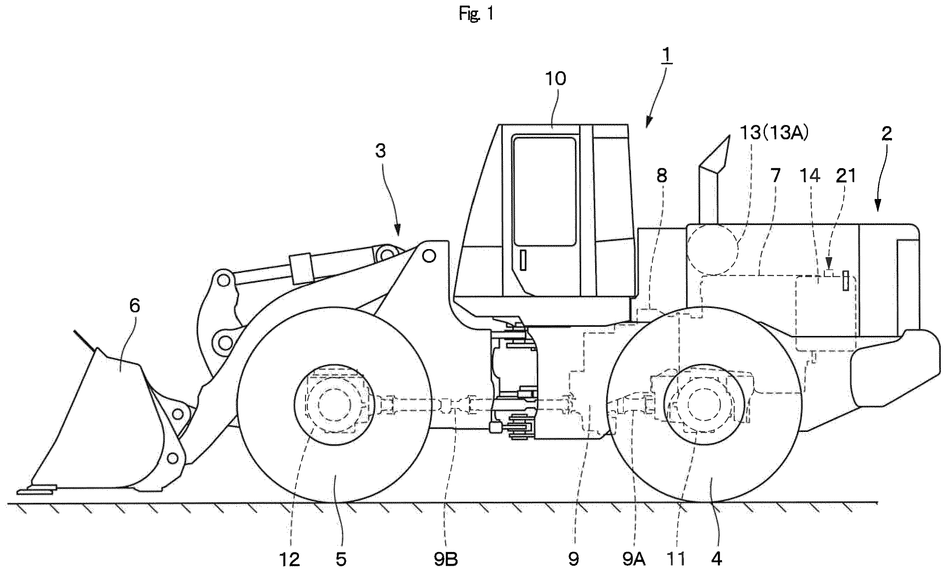

Figs. 1 to 3 show a first embodiment. In Fig. 1, a wheel loader 1 as a construction machine is configured to include a rear vehicle body 2, a front vehicle body 3 connected frontward of the rear vehicle body 2 and capable of swinging in the right-and-left direction, a rear wheel 4 provided on either side of the rear vehicle body 2 in the right-and-left direction, a front wheel 5 provided on either side of the front vehicle body 3 in the right-and-left direction (the rear wheel 4 and the front wheel 5 shown only on the left side), and a working mechanism 6 provided frontward of the front vehicle body 3 and capable of tilting up and down.

Also, the rear vehicle body 2 is provided with an engine 7 serving as a drive source, a torque converter 8, a transmission 9, a hydraulic pump (not shown) and the like. The engine 7 is configured as a diesel engine. A later-described exhaust gas purifying device 13 is provided on the exhaust gas side of the engine 7.

A cab 10 for an on-board operator is provided upward of the rear vehicle body 2. The transmission 9 is connected to a rear axle device 11 via a propeller shaft 9A extending in the front-rear direction. The transmission 9 is connected to a front axle device 12 via a propeller shaft 9B.

The exhaust gas purifying device 13 is provided on the exhaust gas side of the engine 7 to purify exhaust gas discharged by the engine 7. The exhaust gas purifying device 13 is formed as an NOx purifying device purifying nitrogen oxides (NOx) in the exhaust gas, using a later-described urea water (urea water solution) 15. The exhaust gas purifying device 13 has an accommodating tubular body 13A connected to the exhaust gas side of the engine 7, the accommodating tubular body 13A including a urea selective reduction catalyst, an oxidation catalyst and a urea water injection valve (each not shown). The urea water 15 is supplied to the urea water injection valve via a urea water line (not shown) from a later-described urea water tank 14.

In this configuration, the exhaust gas purifying device 13 allows the urea water injection valve to inject the urea water 15 into the exhaust gas and the urea selective reduction catalyst to cause a reduction reaction of NOx in the exhaust gas using ammonia generated by the urea water 15 to resolve the urea water into water and nitrogen. Then, the oxidation catalyst reduces the amount of ammonia in the exhaust gas.

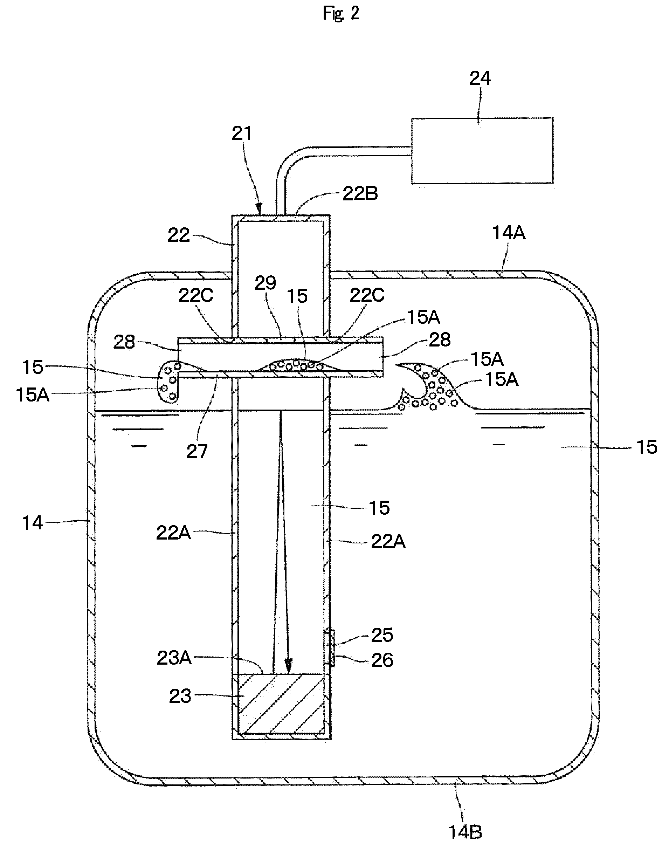

The urea water tank 14 as a liquid tank is provided on the rear side of the rear vehicle body 2, for example. As shown in Fig. 2, the urea water tank 14 reserves the urea water 15 as a reducing agent that is supplied to the urea water injection valve of the exhaust gas purifying device 13. A later-described liquid level detecting device 21 is provided at the urea water tank 14. In addition, the urea water tank 14 is provided with a line connecting with the urea water injection valve, a quality sensor detecting the quality of the urea water 15 and the like (each not shown).

Herein, the urea water tank 14 can significantly sway when the wheel loader 1 travels or is operated. In this case, the urea water 15 sloshes to generate air bubbles (incl. microbubbles) 15A in the urea water tank 14.

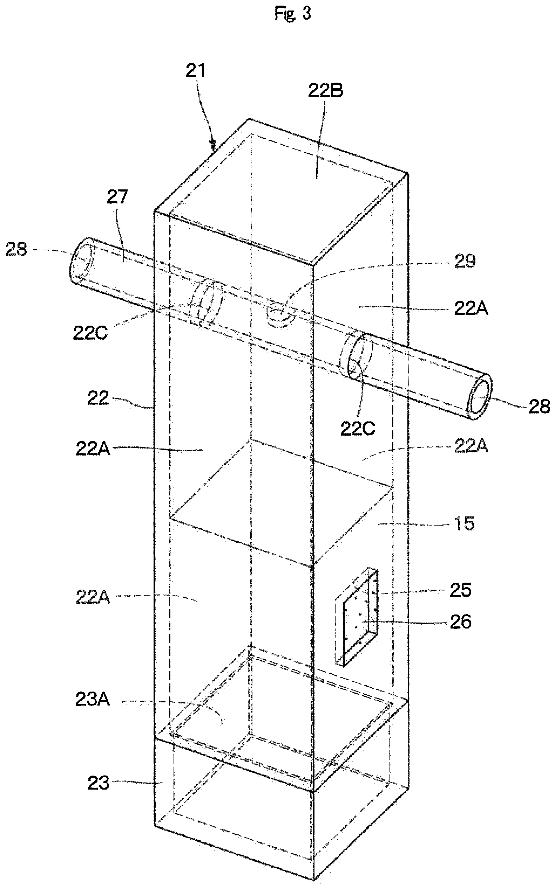

Subsequently, the configuration of the liquid level detecting device 21 that constitutes the characterizing portion of the first embodiment of the present invention will be described with reference to Figs. 2 and 3.

In Fig. 2, the liquid level detecting device 21 is provided at the urea water tank 14. The liquid level detecting device 21 detects a liquid level position of the urea water 15 reserved in the urea water tank 14, that is, a remaining amount of the urea water. The liquid level detecting device 21 is configured to include a later-described case 22, an ultrasonic sensor 23, a water flow hole 25, a venting tube 27, an external venting hole 28, and an internal venting hole 29.

The case 22 is provided to extend in the vertical direction within the urea water tank 14. The case 22, for example, has an upper side (other side) that protrudes from a top surface portion 14A upward and a lower side (one side) that is located near a bottom surface portion 14B of the urea water tank 14. As shown in Fig 3, the case 22 is formed as an angular tubular body whose upper side is closed. Specifically, the case 22 is composed of four side surface portions 22A disposed to form a quadrangle and a top surface part 22B closing the upper sides of the four side surface portions 22A. The lower side of the case 22 is closed by a later-described ultrasonic sensor 23. The case may have a lower side closed by a bottom surface portion on which an ultrasonic sensor is included. In addition, the case may be formed as a polygonal tube other than a cylindrical body and a quadrangular tube.

Further, the case 22 includes tube mounting holes 22C formed on the upper sides of the side surface portions 22A that are opposite each other. The two tube mounting holes 22C are each disposed to be higher than a liquid level position of the urea water 15 in a filled-up urea water tank. A later-described venting tube 27 is inserted into the two tube mounting holes 22C.

The ultrasonic sensor 23 is provided on a lower side or one side of the case 22. The ultrasonic sensor 23 includes an oscillating and receiving portion 23A including an ultrasound oscillator (piezoelectric device) on an upper surface thereof. In the ultrasonic sensor 23, the oscillating and receiving portion 23A can oscillate sound waves and receive the same after reflecting off a liquid level of the urea water 15. The ultrasonic sensor 23 is connected to a controller 24.

Thereafter, the ultrasonic sensor 23 transmits a signal to the controller 24 indicative of a duration from the oscillation to reception of sound waves by the oscillating and receiving portion 23A. This mechanism allows the controller 24 to detect (calculate) a liquid level position of the urea water 15 from the duration from the oscillation to reception of the sound waves.

The water flow hole 25 is provided on the lower side of the side surface portion 22A of the case 22 near the ultrasonic sensor 23. The water flow hole 25 constitutes a passage moving the urea water 15 in and out of the case 22.

A film body 26 is provided to cover the water flow hole 25. The film body 26 is formed of a porous film having numerous micropores. The film body 26 prevents ingress of air bubbles (microbubbles) 15A and allows only the urea water 15 to flow thereinto when the urea water 15 in the urea water tank 14 flows into the case 22 through the water flow hole 25. Thus, the film body 26 inhibits false detection by sound waves of the ultrasonic sensor 23 hitting the air bubbles 15A.

The venting tube 27 is provided on the upper side of the case 22 to be higher than a liquid level position of the urea water 15 in a filled-up urea water tank. Specifically, the venting tube 27 is inserted into the tube mounting holes 22C to extend in the horizontal direction so as to penetrate the side surface portions 22A of the case 22 that are opposite each other. The venting tube 27 extends linearly and is formed as a circular tubular body whose both ends are open. In other words, the venting tube 27 is provided such that two end portions in communication with each other are located outward of the case 22. Based upon this configuration, the venting tube 27 protrudes from the side surface portion 22A of the case 22 outward of the case 22 to allow a later-described external venting hole 28 to be spaced apart from the side surface portion 22A and in an open state. The venting tube may be elliptically shaped or angularly shaped, in addition to a circular cylinder.

External venting holes 28 are each provided to be open at either end of the venting tube 27 located outward of the case 22. The external venting hole 28 is located upward from a liquid level of the urea water 15 and constitutes one venting hole moving the air between the inside and the outside of the case 22. The external venting hole 28 is disposed to be spaced apart from the side surface portion 22A of the case 22 outward. The resulting larger distance dimension of the external venting hole 28 with a later-described internal venting hole 29, even in a case of ingress of the urea water 15 into the venting tube 27, allows the urea water to stay at a lower position in the venting tube 27 until the urea water 15 reaches the vicinity of an internal venting hole 29. In other words, the urea water 15 can be separate from the internal venting hole 29 in the venting tube 27. In addition, the external venting hole 28 can prevent ingress of the urea water 15 into the external venting hole 28 even if the urea water 15 attached to the side surface portion 22A flows down.

The internal venting hole 29 is provided to be open at an upper position of the venting tube 27 within the case 22. The internal venting hole 29 constitutes other venting hole moving the air between the inside and the outside of the case 22. The internal venting hole 29 can be open at the upper position of the venting tube 27 to prevent flow of the urea water into the case 22, even in a case of ingress of the urea water 15 from the external venting hole 28 into the venting tube 27.

The liquid level detecting device 21 according to the first embodiment is configured as described above, and subsequently the operation of detecting a liquid level position of the urea water 15 in the urea water tank 14 will be described.

First, with the urea water 15 in the urea water tank 14 moving in and out of the case 22 through the water flow hole 25, liquid level positions of the urea water 15 in and out of the case 22 (within the urea water tank 14) are the same. In this case, the case 22 is advantageously provided with the film body 26 composed of a porous film so as to cover the water flow hole 25, which can prevent ingress of the air bubbles (microbubbles) 15A when the urea water 15 in the urea water tank 14 flows into the case 22.

In a case where the level of the urea water 15 rises or falls in the case 22 (i.e., the liquid level position is displaced in the vertical direction), the air stagnant on the upper side of the case 22 must be released or the air must be supplied to the case in order to keep the pressures in and out of the case 22 even. In this case, an upper space in the case 22 communicates with the urea water tank 14 through the external venting hole 28 and the internal venting hole 29 provided at the venting tube 27, thereby generating little airflow resistance and freely releasing or supplying the air, depending on the rising or falling level of the urea water 15. That is, the pressures in and out of the case 22 can be kept even.

Then, the ultrasonic sensor 23 oscillates sound waves upward from the oscillating and receiving portion 23A. At this time, with the urea water 15 in the case 22 containing no air bubbles 15A, the oscillating and receiving portion 23A oscillates sound waves and receives the same after the sound waves reflect off a liquid level of the urea water 15. The detection data is transmitted to the controller 24, which will detect (calculate) a liquid level position of the urea water 15 from a duration from the oscillation to reception to display a remaining amount of the urea water 15 on a monitor (not shown) in the cab 10.

In fact, in such a working environment as the wheel loader 1 can repeatedly travel or stop and be operated on rugged land, uneven land, inclined land, as shown in Fig. 2, the urea water 15 in the urea water tank 14 can significantly slosh to allow the urea water 15 containing the air bubbles 15A to reach the external venting hole 28.

Therefore, according to the first embodiment, the liquid level detecting device 21 includes the venting tube 27 located on the upper side (other side) of the case 22 opposite the water flow hole 25 and the ultrasonic sensor 23 and provided so as to penetrate the side surface portion 22A of the case 22. The venting tube 27 is provided with the external venting holes 28 that are open outward of the case 22 and the internal venting hole 29 that is open on the upper side (other side) of the case 22 within the case 22 and in communication with the external venting holes 28.

Accordingly, even ingress of the urea water 15 containing the air bubbles 15A from the external venting hole 28 into the venting tube 27 allows the urea water 15 containing the air bubbles 15A to flow into the urea water tank 14 (out of the case 22) through the venting tube 27, because the internal venting hole 29 is open at the upper position of the venting tube 27. This mechanism can prevent ingress of the urea water 15 containing the air bubbles 15A from the external venting hole 28 and the internal venting hole 29 into the case 22. In other words, entry of the air bubbles 15A into the urea water 15 within the case 22 can be prevented. Consequently, the ultrasonic sensor 23 can properly be operated, and the reliability for the detection of a liquid level position of the urea water 15 can be improved.

The venting tube 27 is provided such that two end portions thereof in communication with each other are located outward of the case 22. Based upon this configuration, the external venting holes 28 are disposed at two end portions of the venting tube 27. In this configuration, in a case where a vehicle body of the wheel loader 1 inclines during the operation on rugged land, uneven land or inclined land, the urea water 15 containing the air bubbles 15A can assuredly be flowed out of the external venting hole 28 provided at a lower end portion of the two end portions.

The venting tube 27 protrudes from the side surface portion 22A of the case 22, and the external venting hole 28 is disposed to be spaced apart from the side surface portion 22A of the case 22 outward. Accordingly, the external venting hole 28 is significantly separate from the internal venting hole 29. This configuration, even in a case of ingress of the urea water 15 from the external venting hole 28 into the venting tube 27, allows the venting tube 27 to cause the urea water to stay at a lower position in the venting tube 27 until the urea water 15 reaches the vicinity of the internal venting hole 29. In addition, the venting tube 27 can prevent ingress of the urea water 15 into the external venting hole 28 even if the urea water 15 attached to the side surface portion 22A flows down.

The venting tube 27 has both end portions, each corresponding to the external venting hole 28 and formed of a cylindrical pipe member. In addition, the venting tube 27 is provided so as to penetrate the side surface portions 22A of the case 22 that are opposite each other. This configuration can readily form a venting tube 27 using a linear pipe member.

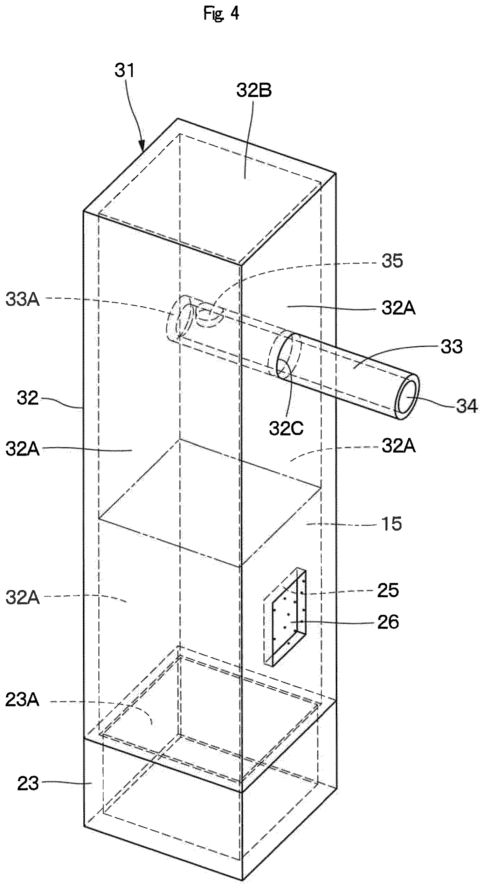

Subsequently, Fig. 4 shows a second embodiment of the present invention. The characteristic of the second embodiment lies in the configuration where a venting tube penetrating a side surface portion of a case is formed as a tubular body having an external end portion of the case that is open and an internal end portion of the case that is closed. In the second embodiment, the component elements that are identical to those of the foregoing first embodiment will be simply denoted by the same reference numerals to avoid repetitions of similar explanations.

In Fig. 4, a liquid level detecting device 31 according to the second embodiment includes a case 32. The case 32 has four side surface portions 32A and a top surface part 32B, one of the side surface portions 32A provided with a single tube mounting hole 32C higher than a liquid level position of a urea water 15 in a filled-up urea water tank. In addition, the case may be formed as a polygonal tube other than a cylindrical body and a quadrangular tube.

A venting tube 33 is inserted into the tube mounting holes 32C to extend in the horizontal direction so as to penetrate the side surface portion 32A of the case 32. The venting tube 33 is formed as a lidded circular tubular body having a linearly extending external end portion that is open out of the case 32 and an internal end portion that is closed with a lid portion 33A in the case 32. The venting tube 33, similarly to the venting tube 27 according to the first embodiment, has the external end portion out of the case 32 that protrudes from the side surface portion 32A.

An external venting hole 34 is open at an end portion of the venting tube 33 out of the case 32. An internal venting hole 35 is in communication with the external venting hole 34 through the venting tube 33 and open at an upper position of the venting tube 33 within the case 32.

Thus, the liquid level detecting device 31 according to the second embodiment thus configured can provide a similar operational effect as the first embodiment. In particular, a liquid level detecting device 31 according to the second embodiment can be formed only by inserting a venting tube 33 into one side surface portion 32A, resulting in a simplified configuration.

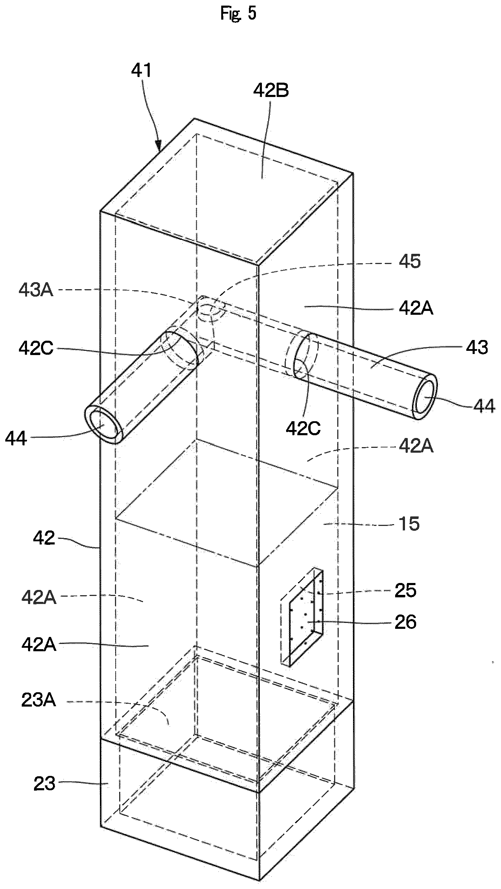

Subsequently, Fig. 5 shows a third embodiment of the present invention. The characteristic of the third embodiment lies in the configuration where a bent venting tube is provided so as to penetrate adjacent side surface portions of a case. In the third embodiment, the component elements that are identical to those of the foregoing first embodiment will be simply denoted by the same reference numerals to avoid repetitions of similar explanations.

In Fig. 5, a liquid level detecting device 41 according to the third embodiment includes a case 42. The case 42 has four side surface portions 42A and a top surface part 42B, two adjacent side surface portions 42A provided with a tube mounting hole 42C higher than a liquid level position of a urea water 15 in a filled-up urea water tank. In addition, the case may be formed as a polygonal tube other than a cylindrical body and a quadrangular tube.

A venting tube 43 is formed as an L-shaped tubular body such that an intermediate portion in a length direction bends as a bending portion 43A. The L-shaped venting tube 43 is inserted into the tube mounting hole 42C to extend in the horizontal direction so as to penetrate the adjacent side surface portions 42A of the case 42. The venting tube 43, similarly to the venting tube 27 according to the first embodiment, has an end portion out of the case 42 that protrudes from the side surface portion 42A.

External venting holes 44 are disposed at two end portions of the venting tube 43 out of the case 42. An internal venting hole 45 is in communication with the external venting holes 44 through the venting tube 43 and disposed at an upper position of the bending portion 43A of the venting tube 43 within the case 42.

Thus, the liquid level detecting device 41 according to the third embodiment thus configured can provide a similar operational effect as the first embodiment.

In the first embodiment, the case where the venting tube 27 is allowed to penetrate two side surface portions 22A of the case 22, and in the second embodiment, the venting tube 33 is allowed to penetrate one side surface portion 32A of the case 32 is illustrated. However, the present invention is not limited to that, and the venting tube may be configured to be trifurcate such as T-shaped or Y-shaped, penetrating three side surface portions. Also, the venting tube may be configured to be cross-shaped, penetrating four side surface portions.

In the first embodiment, the case where the liquid level detecting device 21 is provided at the urea water tank 14 of the wheel loader 1 as a construction machine is illustrated. However, the present invention is not limited to that, and a liquid level detecting device may be provided in a urea water tank of other type of construction machine such as a hydraulic excavator. Also, the liquid level detecting device can be used for detecting a liquid level position of a liquid other than urea water (e.g., fuels, water). These configurations can apply to other embodiments.

### DESCRIPTION OF REFERENCE NUMERALS

15: Urea water (Liquid)
15A: Air bubble
21, 31, 41: Liquid level detecting device
22, 32, 42: Case
22A, 32A, 42A: Side surface portion
23: Ultrasonic sensor
25: Water flow hole
27, 33, 43: Venting tube
28, 34, 44: External venting hole
29, 35, 45: Internal venting hole

## Claims

1. A liquid level detecting device comprising:
a tubular case with a water flow hole allowing a liquid to flow into the case; and
an ultrasonic sensor provided on one side of the case and oscillating and receiving ultrasound, the liquid level detecting device further comprising
a venting tube located on other side of the case opposite the water flow hole and the ultrasonic sensor and provided so as to penetrate a side surface portion of the case, wherein
the venting tube is provided with an external venting hole that is open outward of the case and an internal venting hole that is open on the other side of the case within the case and in communication with the external venting hole.

2. The liquid level detecting device according to claim 1, wherein
the venting tube is provided such that a plurality of end portions in communication with each other is located outward of the case, wherein
the external venting holes are formed at the plurality of end portions.

3. The liquid level detecting device according to claim 1, wherein
the venting tube protrudes outward of the side surface portion of the case, and
the external venting hole is formed to be spaced apart outward of the side surface portion of the case.

4. The liquid level detecting device according to claim 1, wherein
the venting tube has both end portions, each corresponding to the external venting hole and formed of a cylindrical pipe member.

5. The liquid level detecting device according to claim 3, wherein
the venting tube is provided so as to penetrate the side surface portions of the case that are opposite each other.
